(19) Europäisches Patentamt
European Patent Office
Office européen des brevets

(11) Publication number: 0 186 927 A2

(12) # EUROPEAN PATENT APPLICATION

(21) Application number: 85202055.1

(22) Date of filing: 12.12.85

(51) Int. Cl.[4]: C 08 L 79/08, C 08 L 67/02, C 08 L 69/00, C 08 L 81/06

(30) Priority: 31.12.84 US 687866

(43) Date of publication of application: 09.07.86 Bulletin 86/28

(84) Designated Contracting States: DE FR GB IT NL

(71) Applicant: GENERAL ELECTRIC COMPANY, 1 River Road, Schenectady New York 12305 (US)

(72) Inventor: Holub, Fred F., General Electric Plastics B.V. P.O. Box 117, NL-4600 AC Bergen op Zoom (NL)
Inventor: Rock, John A., General Electric Plastics B.V. P.O. Box 117, NL-4600 AC Bergen op Zoom (NL)
Inventor: Miller, Kenneth F., General Electric Plastics B.V. P.O. Box 117, NL-4600 AC Bergen op Zoom (NL)
Inventor: Johnson, Robert O., General Electric Plastics B.V. P.O. Box 117, NL-4600 AC Bergen op Zoom (NL)

(74) Representative: Grever, Frederik, General Electric Plastics B.V. P.O. Box 117, NL-4600 AC Bergen op Zoom (NL)

(54) **Polymer blends containing a polyetherimide and a polyphthalate carbonate.**

(57) Polymer blends contain (a) a polyetherimide and (b) a polyphthalate carbonate. The blends have excellent high temperature properties, improved impact resistance values and are able to be processed at relatively low processing temperatures. The blends optionally may contain an additional thermoplastic polymer selected from polysulfone, polyesters and polycarbonates.

0 186 927

# POLYMER BLENDS CONTAINING A POLYETHERIMIDE AND A POLYPHTHALATE CARBONATE

## BACKGROUND OF THE INVENTION

This invention is directed to molding compositions comprising blends of a polyetherimide and a polyphthalate carbonate. The compositions can also contain thermoplastic polymers which are compatible with the blends of the polyetherimide and the polyphthalate carbonate.

Polyetherimides resins are well known in the art and are of considerable commercial value for use in molding compositions because of their excellent physical, chemical and thermal properties. The high glass transition and heat deflection temperatures exhibited by these polymers permit their use in high performance applications previously reserved for metals and some thermoset resins. These high glass transition temperatures also require, however, that the polymers be processed at relatively high temperatures, compared to other injection moldable thermoplastics. High processing temperatures require more expensive equipment and greater energy costs. For many applications, it would be desirable to have a resin with a lower processing temperature, yet which maintains the toughness and other advantageous physical properties of polyetherimides.

It is known that the processing temperatures of polyetherimides can be reduced by forming blends of those polymers with polyesters, such as polyethylene terephthalate or polybutylene terephthalate. See, White et al., U.S. Patent 4,141,927. Although such blends maintain many of the physical properties of polyetherimides, they have not been found to have the toughness or impact strengths characteristic of polyetherimides.

Binary blends of polyestercarbonate resins and polyetherimides have been prepared for the primary purpose of improving the thermal properties of the polyestercarbonates. See, Quinn et al., U.S. Patent 4,430,484. Again, although these blends exhibit certain advantageous properties, they have not been found to possess the toughness or impact properties of polyetherimides.

Thus, there exists a need for a polymer blend which requires lower processing temperatures than polyetherimides, yet maintains the toughness and impact properties of those polymers.

## SUMMARY OF THE INVENTION

The present invention relates to a thermoplastic composition comprising in admixture a polyetherimide and a polyphthalate carboante prepared from a dihydric phenol, a carbonate precursor, a terephthalic acid or ester derivative thereof, and an isophthalic acid or ester derivative thereof. The polyphthalate carboante is further characterized by having from about 70 to about 95 weight percent ester content and a range of terephthalate groups ranging from about two to about fifteen percent of the ester content. These thermoplastic compositions can be blended with other polymers such as polyesters, polycarbonates and polysulfones.

## DETAILED DESCRIPTION OF THE INVENTION

The present invention provides polymeric blends containing in admixture a polyetherimide and a polyphthalate carboante. These blends can be further combined with such polymers as polyesters, polycarbonates and polysulfones.

The polyetherimides that can be employed in the present invention include repeating groups of the formula:

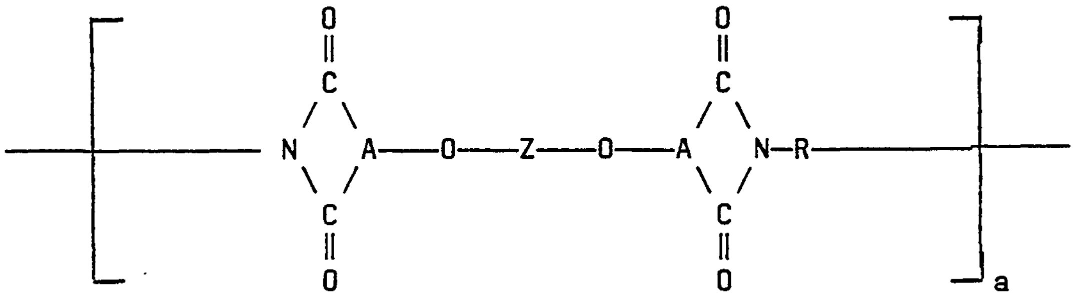

wherein "a" represents a whole number in excess of 1, e.g., 10 to 10,000 or more, the group -O-A< is selected from:

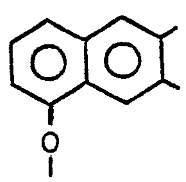

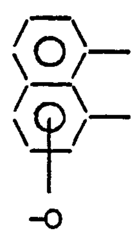

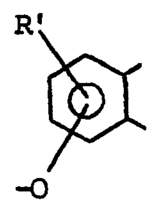

R' being hydrogen, lower alkyl or lower alkoxy. Preferably, the polyetherimide includes the latter -O-A< group where R' is hydrogen such that the polyetherimide is of the formula:

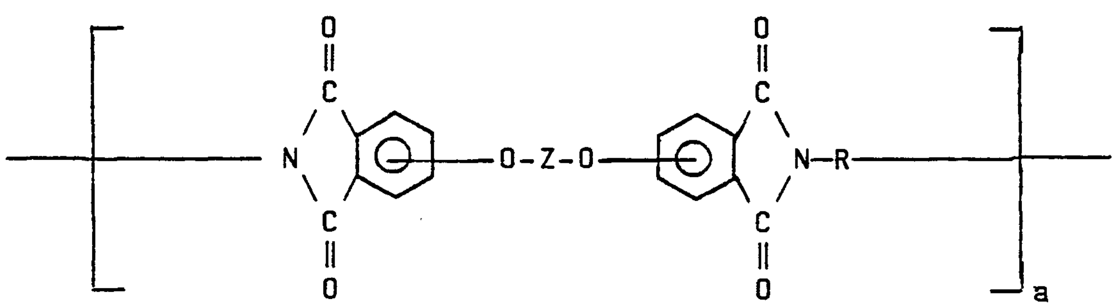

and the divalent bonds of the -O-Z-O- radical are in the 3,3', 3,4', 4,3' or the 4,4' position; Z is a member of the class consisting of (1)

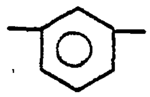 , 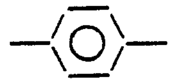 , 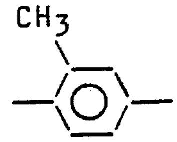 ,

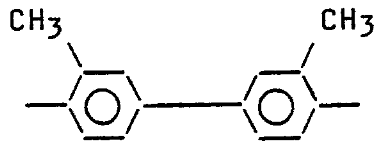 , 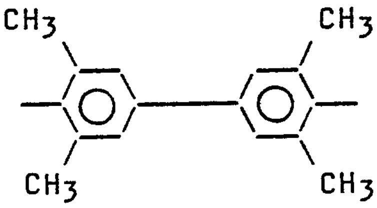

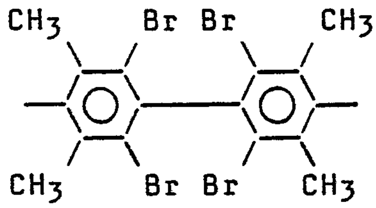 and 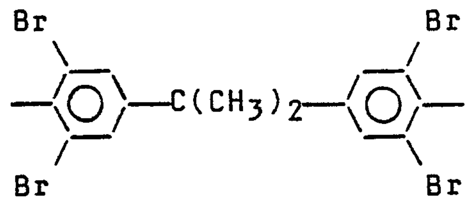

and (2) divalent organic radicals of the general formula:

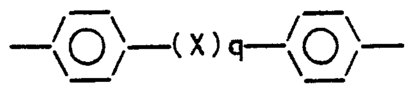

where X is a member selected from the class consisting of divalent radicals of the formulas,

$$-C_yH_{2y}-,\quad -\overset{\overset{\displaystyle O}{\|}}{C}-,\quad -\underset{\underset{\displaystyle O}{\|}}{\overset{\overset{\displaystyle O}{\|}}{S}}-,\quad -O-\ \text{and}\ -S-$$

where q is 0 or 1, y is a whole number from 1 to 5, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from 2 to about 20 carbon

atoms, (3) $C_2$ to about $C_8$ alkylene terminated polydiorganosiloxane, and (4) divalent radicals included by the formula:

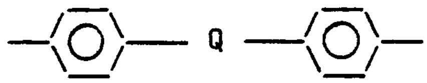

where Q is a member selected from the class consisting of:

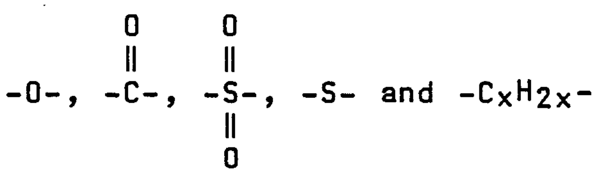

where x is a whole number from 1 to 5 inclusive. Particularly preferred polyetherimides for the purposes of the present invention include those wherein -O-A< and Z respectively are:

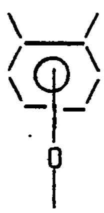

and

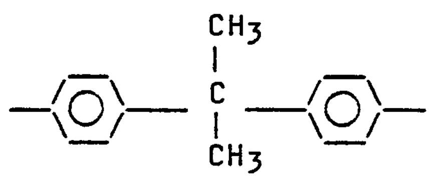

and R is selected from:

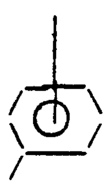

,

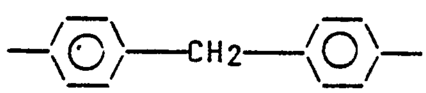

and

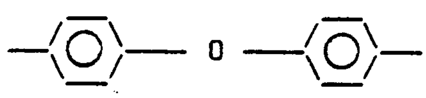

The polyetherimides wherein R is m-phenylene are most preferred.

In one embodiment of the present invention the polyetherimide may be a copolymer which, in addition to the etherimide units described above, further contains repeating units of the formula:

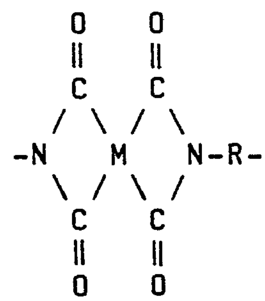

where R is previously defined and M is selected from the group consisting of

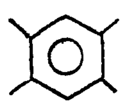 , 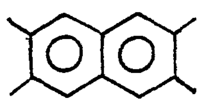 and 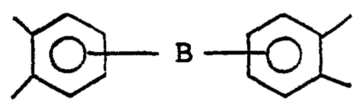

where B is -S- or $-\overset{O}{\overset{\|}{C}}-$. These polyetherimide copolymers are described by Williams, et al., Patent 3,983,093, incorporated herein by reference.

The polyetherimides can be obtained by any of the methods well known to those skilled in the art, including the reaction of an aromatic bis(ether anhydride) of the formula:

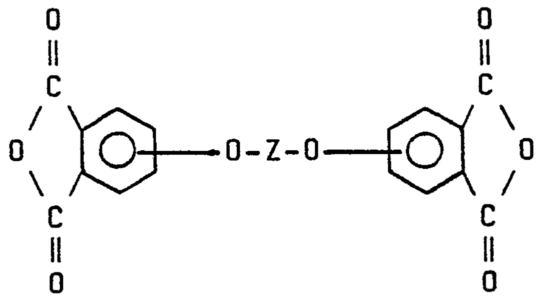

with an organic diamine of the formula:

$$H_2N-R-NH_2$$

wherein Z and R are as defined hereinbefore.

Aromatic bis(ether anhydride)s of the above formula include, for example, 2,2-bis[4-(2,3-dicarboxyphenoxy)-phenyl]-propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxyphenoxy)benzene dianhydride; 4,4'-bis(2,3-dicarboxyphenoxy)benzophenone dianhydride; 4,4'-bis(2,3-dicarboxyphenoxy)diphenyl sulfone dianhydride; 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)benzene dianhydride; 1,4-bis(3,4-dicarboxyphenoxy)benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl-2,2-propane dianhydride; etc. and mixtures of such dianhydrides.

In addition, aromatic bis(ether anhydride)s also included by the above formula are shown by Koton, M.M.; Florinski, F.S.; Bessonov, M.I.; Rudakov, A.P. (Institute of Heteroorganic Compounds, Academy of Science, U.S.S.R.), U.S.S.R. 257,010, Nov. 11, 1969,

Appl. May 3, 1967. In addition, dianhydrides are shown by M.M. Koton, F.S. Florinski, Zh. Org. Khin., 4(5), 774 (1968).

Organic diamines of the above formula include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine, 3,3'-dimethoxybenzidine, 2,4-bis(β-amino-t-butyl)toluene, bis(p-β-methyl-o-aminopentyl)benzene, 1,3-diamino-4-isopropylbenzene, 1,2-bis(3-aminopropoxy)-ethane, m-xylylenediamine, p-xylylenediamine, 2,4-diaminotoluene, 2,6-diaminotoluene, bis(4-aminocyclohexyl)-methane, 3-methylheptamethylenediamine, 4,4-dimethylheptamethylenediamine, 2,11-dodecanediamine, 2,2-dimethylpropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl) sulfide, N-methyl-bis(3-aminopropyl) amine, hexamethylenediamine, heptamethylenediamine, nonamethylenediamine, decamethylenediamine, bis(3-aminopropyl)tetramethyldisiloxane, bis(4-aminobutyl)tetramethyldisiloxane, and the like.

Advantageously, the reactions between the diahydrides and the diamines can be carried out employing well known solvents, e.g., o-dichlorobenzene, m-cresol/toluene, etc. at temperatures of from about 100°C to about 250°C. Alternatively, the polyetherimides can be prepared by melt polymerization of any of the above dianhydrides with any of the above diamine compounds while heating the mixture of ingredients at elevated temperatures with concurrent intermixing. Generally,

melt polymerization temperatures between about 200°C to 400°C and preferably 230°C to 300°C can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides; however, in certain instances, a slight molar excess (about 1 to 5 mol percent) of diamine can be employed resulting in the production of polyetherimides having terminal amine groups. Generally, useful polyetherimides have an intrinsic viscosity [$\eta$] greater than 0.2 deciliters per gram, preferably 0.35 to 60, or 0.7 deciliters per gram or even higher when measured in m-cresol at 25°C.

The compositions of the present invention comprise a polymeric blend containing in admixture a polyetherimide and a polyphthalate carbonate. The polyphthalate carbonates useful in the present invention are derived from a dihydric phenol, a carbonate precursor, a terephthalic acid or acid derivative and an isophthalic acid or acid derivative. The polyphthalate carbonate has from about 70 to about 95 weight percent ester content and a range of terephthalate groups from about 2 to about 15 weight percent of the total ester content. These polyphthalate carbonates are known and are described, for example, by Miller et al., U.S. Patent No. 4,465,820, herein incorporated by reference.

The dihydric phenols which can be employed to prepare the polyphthalate carbonates useful in this invention include the dihydric phenols generally found useful in preparing aromatic polycarbonates. Typical dihydric phenols which can be employed are:

2,2-bis(4-hydroxyphenyl)propane(bisphenol A);

2,4'-dihydroxydiphenylmethane;

bis(2-hydroxyphenyl)methane;
bis(4-hydroxyphenyl)methane;
bis(4-hydroxy-5-propylphenyl)methane;
bis(4-hydroxy-2,6-dimethyl-3-methoxyphenyl)methane;
1,1-bis(4-hydroxyphenyl)ethane;
1,1-bis(4-hydroxy-2-ethylphenyl)ethane;
2,2-bis(3-phenyl-4-hydroxyphenyl)propane;
bis(4-hydroxyphenyl)cyclohexylmethane; and
2,2-bis(4-hydroxyphenyl)-1-phenylpropane.

Bisphenols other than those having a carbon atom between the two phenols can also be employed. Examples of such groups of bisphenols include bis(hydroxyphenyl)sulfides, bis(hydroxyphenyl)ethers and bis(hydroxyphenyl)sulfoxides and the like.

Preferred dihydric phenols are those of the formula

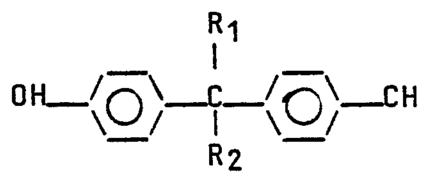

wherein $R_1$ and $R_2$ are the same or different and are hydrogen or alkyl of from one to six carbon atoms, inclusive. The most preferred dihydric phenol is bisphenol A.

The aromatic dicarboxylic acids employed in the preparation of the polyphthalate carbonate are terephthalic acid and isophthalic acid and reactive derivatives thereof. Any derivative of a carboxylic acid which is reactive with the hydroxyl of a dihydric phenol can be employed. The acid halides are generally employed because of their ease of reactivity and availability. The acid chlorides are preferred.

The carbonate precursor employed can be either a carbonyl halide, a carbonate ester or a haloformate. The carbonyl halides which can be employed are carbonyl

bromide, carbonyl chloride and mixtures thereof. Typical of the carbonate esters which can be employed are diphenyl carbonate, a di(halophenyl)carbonate such as di(chlorophenyl)carbonate, di(bromophenyl)carbonate, di(trichlorophenyl)carbonate, di(tribromophenyl)-carbonate, etc., di(alkylphenyl)carbonate, such as di(tolyl)carbonate, etc., di(chloronaphthyl carbonate, etc., or mixtures thereof. The suitable haloformates include bis-haloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene, is preferred.

The weight percent ester content in the polyphthalate carbonate is from about 70 to about 95, preferably 75 to 90. Above about 95 weight percent ester content, the polyphthalate carbonate is generally more difficult to process. Below about 70 weight percent ester content, the distortion temperatures under load of the polymer are generally less than desirable. The weight percent ester content is calculated in the manner as described in U.S. Patent No. 4,465,820.

The quantity of terephthalate units present in the polyphthalate carbonate can range from about 2 to about 15 weight percent, with the remaining ester units being isophthalate units. When the terephthalate units are below 2 weight percent, the Notched Izod impact resistance of the polyphthalate carbonate is undesirably low. Above 15 weight percent terephthalate, the resistance of the polymer to stress cracking is lowered. Preferably, the amount of terephthalate units ranges from about 5 to about 10 weight percent.

The polyetherimides and the polyphthalate carbonates are combinable with each other in all proportions. The

relative proportions of the polymers are such that the impact strength of the unmodified polyetherimide is maintained, while the melt viscosity is reduced. Accordingly, compositions comprising from 1 to 99 percent by weight of a polyetherimide and from 99 to 1% by weight of a polyphthalate carbonate are included within the scope of the present invention. Preferably, the binary blend comprises from about 50 to about 80 percent by weight of polyetherimide and from about 20 to about 50% by weight of polyphthalate carbonate. By controlling the proportions of each component, blends can be formed having improved properties over those of either a polyetherimide alone or a polyphthalate carbonate alone. Generally, with increasing levels of polyetherimide, the higher the heat distortion temperature will be of the resulting blend. With increasing levels of polyphthalate carbonate, the processing temperatures of the blends is lowered.

Methods for forming the polyetherimide/polyphthalate carbonate blends of the present invention may vary considerably. Prior art blending techniques are generally satisfactory. A preferred method comprises blending the polymers and additives such as reinforcements in powder, granular or filamentous form, extruding the blend, and chopping the extrudate into pellets suitable for molding by means conveniently used to mold normally solid thermoplastic compositions.

If desired, the binary blends of the present invention can be modified by adding amounts of another polymer or polymers. Examples of such polymers include, polyesters, polycarbonates and polysulfones.

The aromatic polyesters that can be used in combination with the polyetherimide/polyphthalate carbonate blend are generally of the formula:

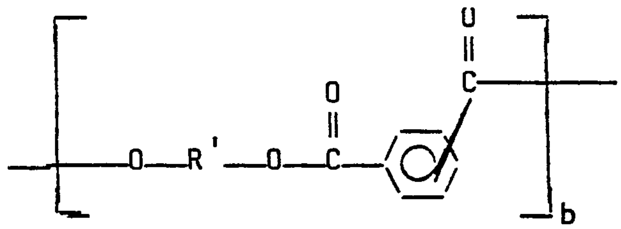

wherein b represents a whole number in excess of 1, e.g., 10 to 10,000 or more, R' is a divalent alkylene radical containing from 2 to about 10 or more carbon atoms, and and the carboxylate groups are located on the aromatic ring in the para- or meta-positions relative to each other.

The polyesters can be obtained by any of the methods well-known to those skilled in the art including the reaction of any aromatic dicarboxylic acid of the formula:

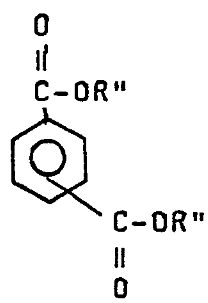

where independently each R" is an alkyl radical having from 1 to 10 or more carbon atoms, with any aliphatic diol of the formula:

HO-R'-OH

where R' is as previously defined.

As used herein and in the appended claims, the term "polyesters" include esters of the above formula prepared by esterifying or transesterifying terephthalic acid, isophthalic acid, or their low molecular weight esters or mixtures thereof, plus other polyesters derived from aromatic dicarboxylic acids or their alkyl esters and

other aliphatic diols or polyols other than those mentioned above. Preferred polyesters include polyethylene terephthalate and polybutylene terephthalate resins, hereinafter referred to as PET and PBT, respectively. Other preferred polyesters that can be used in the present invention include PET copolyesters and PBT copolyesters, i.e.,esters that contain a minor amount, e.g., from about 0.5 to about 2% by weight, of repeating units derived from an aliphatic or another aromatic dicarboxylic acid and/or another aliphatic diol or polyol. Among the units which can be present in the copolyesters are those derived from aliphatic dicarboxylic acids, e.g., acids having up to about 50 carbon atoms, including cycloaliphatic, straight and branched chain acids, such as adipic acid, cyclohexanediacetic acid, dimerized $C_{16-18}$ unsaturated acids (which have 32 to 36 carbon atoms), trimerized such acids, and the like. Among the units in the copolyesters can also be minor amounts derived from aromatic dicarboxylic acids, e.g., acids having up to about 36 carbon atoms, and the like. In addition to the PET and PBT units derived from ethylene glycol and 1,4-butylene glycol, respectively, there can also be minor amounts of units derived from other aliphatic glycols and polyols, e.g., diols and polyols having up to about 50 carbon atoms, including ethylene glycol, propylene glycol, butylene glycol, cyclohexanediol, and the like.

Generally useful high molecular weight polyester resins have an intrisic viscosity of at least 0.2 and preferably about 0.8 deciliters per gram (dl/g) as measured in o-chlorophenol, a 60/40 phenol-tetrachloroethane mixture or similar solvent systems when measured at 25°-30°C. The upper intrinsic viscosity limit is not critical, however it will generally be about 2.5 dl/g. Especially preferred polyester resins will have an

intrinsic viscosity within the range of from about 0.5 to about 1.3.

Among the many methods of making the polyesters that can be used in the present invention are those disclosed in the Encyclopedia of Polymer Science and Technology, Vol. II, entitled "Polyesters", pages 62-128, published by Interscience Publishers (1969), as well as those disclosed in Wirth et al., U.S. Pat. Nos. 3,787,364 and 3,838,097, etc. and Winfield, et al., U.S. Pat. No. 2,465,319, Pengilly, U.S. Pat. No. 3,047,539, all of which are hereby incorporated herein in their entireties by reference.

The esterification reactions advantageously can be carried out in an inert atmosphere in the presence of known esterification or transesterification catalysts at nominal reaction temperatures with the simultaneous removal of water or alkanol as produced at elevated temperatures with subsequent further polycondensation at elevated temperatures under reduced pressure in the presence of known catalysts until polyesters of the desired viscosity are obtained.

The polyetherimide/polyphthalate carbonate blends and polyesters are combinable with each other in various proportions. Consequently, compositions comprising from about 5 to about 95 percent by weight of the polyetherimide/polyphthalate carbonate blend and from about 5 to about 95 percent by weight polyester are included within the scope of the invention. Preferably, the polyetherimide/polyphthalate carbonate blend constitutes from about 10 to about 90 percent by weight and the polyester is from about 10 to about 90 percent by weight of the total combined polymers. In general, the higher the level of polyester, the lower the processing temperature of the composition. At lower levels of polyester, the composition is generally characterized by higher

processing temperatures and higher heat distortion temperatures.

Polycarbonates that can be used in combination with the polyetherimide/polyphthalate carbonate blend are high molecular weight, thermoplastic aromatic polymers and include homopolycarbonates and copolycarbonates and mixtures thereof which have average molecular weights of about 8,000 to more than 200,000, preferably of about 20,000 to 80,000 and an intrinsic viscosities of about 0.40 to about 1.0 dl/g as measured in methyene chloride at 25°C. These polycarbonates are derived from dihydric phenols and carbonate precursors and generally contain recurring structural units of the formula:

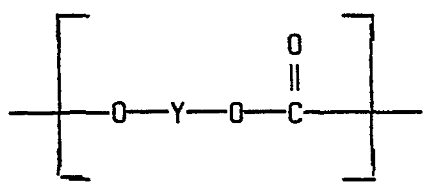

where Y is a divalent aromatic radical of the dihydric phenol employed in the polycarbonate-producing reaction.

Suitable dihydric phenols for producing polycarbonates include the dihydric phenols such as, for example, 2,2-bis(4-hydroxyphenyl)propane, bis(4-hydroxyphenyl)methane, 2,2-bis(4-hydroxy-3-methylphenyl)propane, 4,4-bis(4-hydroxyphenyl)heptane, 2,2-(3,5,3',5'-tetrachloro-4,4'-dihydroxyphenyl)propane, 2,2-(3,5,3',5'-tetrabromo-4,4'-dihydroxyphenyl)propane, and (3,3'-dichloro-4,4'-dihydroxyphenyl)methane. Other dihydric phenols which are also suitable for use in the preparation of the above polycarbonates are disclosed in U.S. Patent Nos. 2,999,835, 3,038,365, 3,334,154, and 4,131,575 incorporated herein by reference.

It is of course possible to employ two or more different dihydric phenols or a copolymer of a dihydric

phenol with a glycol or with hydroxy or acid terminated polyester, or with a dibasic acid in the event a carbonate copolymer or interpolymer rather than a homopolymer is desired for use in the preparation of the blends of the invention. Blends of any of the above materials can also be employed to provide the aromatic polycarbonate. In addition, branched polycarbonates such as are described in U.S. Patent No. 4,001,184, can also be utilized in the practice of this invention, as can blends of a linear polycarbonate and a branched polycarbonate.

In general, any of the carbonate precursors described supra in connection with the polyphthalate carbonate can be employed in making the polycarbonate additive. Phosgene is the preferred carbonate precursor.

The polycarbonate may also be polymeric materials derived from a dihydric phenol, a dicarboxylic acid and carbonic acid. Such polymers are disclosed in U.S. Patent No. 3,169,121, which is incorporated herein by reference.

The polycarbonates of the subject blends can be manufactured by known processes, such as, for example, by reacting a dihydric phenol with a carbonate precursor such as diphenyl carbonate or phosgene in accordance with methods set forth in the above-cited literature and U.S. Patent Nos. 4,018,750 and 4,123,436, or by transesterification processes such as are disclosed in U.S. Patent No. 3,153,008, as well as other processes known to those skilled in the art.

The aromatic polycarbonates are typically prepared by employing a molecular weight regulator, an acid acceptor and a catalyst. The molecular weight regulators which can be employed include phenol, cyclohexanol, methanol, and various alkylated phenols, such as p-(t-butyl)phenol, octylphenol para-tertiary-butyl-phenol, etc. Preferably, phenol or an alkylated pheol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a bicarbonate, or a phosphate of an alkali or alkali earth metal.

The catalysts which can be employed are those that typically aid the polymerization of the monomer with phosgene. Suitable catalysts include tertiary amines such as triethylamine, tripropylamine, N,N-dimethylaniline, quaternary ammonium compounds such as, for example, tetraethyl ammonium bromide, cetyl triethyl ammonium bromide, tetra-n-heptylammonium iodide, tetra-n-propyl ammonium bromide, tetramethyl-ammonium chloride, tetramethyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

Also included are branched polycarbonates wherein a polyfunctional aromatic compound is reacted with the monomer and carbonate precursor to provide a thermoplastic, randomly branched polycarbonate. The polyfunctional aromatic compounds contain at least three functional groups which are carboxyl, carboxylic anhydride, haloformyl, or mixtures thereof. Illustrative polyfunctional aromatic compounds which can be employed include trimellitic anhydride, trimellitic acid, trimellityl trichloride, 4-chloroformyl phthalic anhydride, pyromellitic acid, pyromellitic dianhydride,

mellitic acid, mellitic anhydride, trimesic acid, benzophenonetetracarboxylic acid, benzophenonetetracarboxylic anhydride, and the like. The preferred polyfunctional aromatic compounds are trimellitic anhydride and trimellitic acid or their acid halide derivatives.

The polyetherimide/polyphthalate carbonate blends and polycarbonates are combinable with each other in various proportions. Consequently, compositions comprising from about 5 to about 95 percent by weight polyetherimide/polyphthalate carbonate blend and from about 5 to about 95 percent by weight polycarbonate are included within the scope of the invention. Preferably, the polyetherimide/polyphthalate carbonate blend is from about 10 to about 90 percent by weight and the polycarbonate is from about 10 to about 90 of the total combined weight. In general, the higher the level of polycarbonate, the lower the processing temperatures and heat distortion temperatures will be for the composition. As the level of polycarbonate increases, the tensile elongation of the composition increases.

Another thermoplastic polymer that can be combined with the polyetherimide/polyphthalate carbonate blend is a polysulfone. Polysulfones include those polymeric compounds which have an $-SO_2-$ connecting link between two aryl nuclei. Such polysulfones generally have a weight-average molecular weight of about 10,000 to about 60,000, preferably of about 15,000 to about 50,000 and especially of about 20,000 to about 40,000. The aryl nuclei of such polysulfones can be mononuclear, dinuclear, trinuclear or tetranuclear, and the nuclei can be bonded via fusion, a single bond or a bridge member and preferably contain between 6 and 24 carbon atoms, in particular between 6 and 12 and most preferably, about 6 carbon atoms. The aryl nuclei can carry additional substituents, such as,

for example, $C_1$-$C_6$ alkyl or halogen such as chlorine or bromine. The polysulfones which can be used in the invention can be either linear or branched and they can be employed alone or as mixtures.

The polysulfones which can be used according to the invention are preferably those characterized by the following structural formula:

$$-\!(W-SO_2-W-B)\!-_n$$

wherein W and B are the above-mentioned aryl nuclei; or B is either a direct bond or $-SO_2-$; and n is the degree of polymerization, which is generally an integer in excess of 5.

Particularly preferred polysulfones of the above formula include those where W and optionally B are independently selected from the following divalent aromatic radicals:

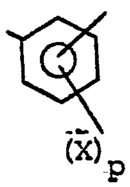
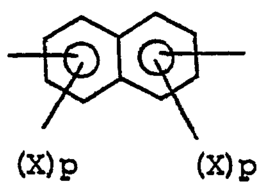
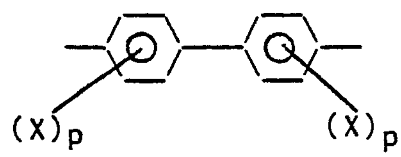

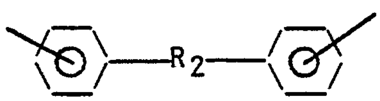
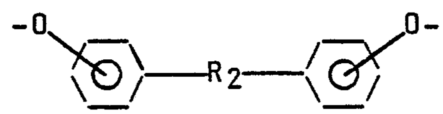

where $R_2$ is a $C_1$ to $C_{12}$ alkylene, preferably $C_1$ to $C_6$; $C_2$ to $C_{12}$ alkylidene; $C_5$ to $C_{12}$ cycloalkylene; $C_5$ to $C_{12}$ cycloalkylidene; $C_7$ to $C_{12}$ aralkylene; $C_7$ to $C_{12}$ aralkylidene; or a $C_8$ to $C_{12}$ arylene-bis-alkylidene radical,

$-O-$, $-S-$, $-\overset{\overset{O}{\|}}{S}-$, or $-\overset{\overset{O}{\|}}{C}-$ or

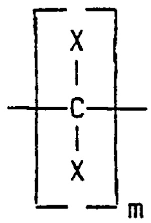

or

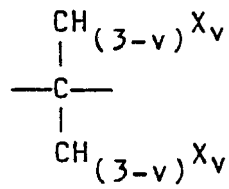

where X is halogen such as fluorine, chlorine or bromine, p is 0 or an integer from 1 to 4, m is an integer from 1 to 6 and v is an integer from 1 to 3.

Particularly preferred polysulfones include those of the formula:

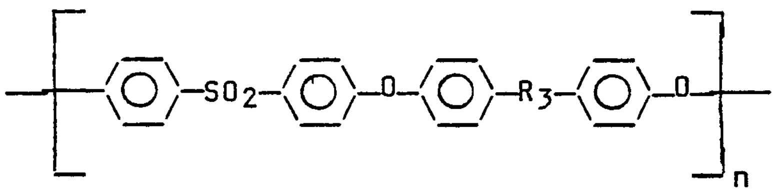

where $R_3$ is $C_1$ to $C_6$ alkylene, especially where $R_3$ is dimethyl methylene which is a polysulfone sold under the tradename Udel by Union Carbide Corp. and those polysulfones where W is phenyl and B is -O- or a direct bond such as:

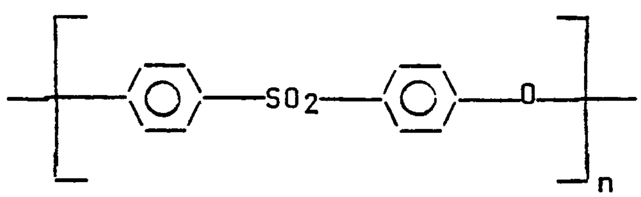

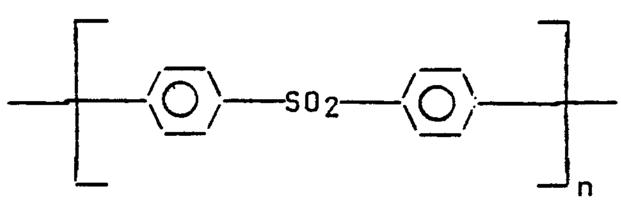

The latter two polysulfones are also available commercially.

The polysulfone resins used in the blends of this invention are prepared by any of the techniques well known in the art. The following patents illustrate methods for preparing these polysulfone resins: Robinson, et al, U.S. Patent No. 3,264,536, issued August 2, 1966; Vogel, U.S. Patent No. 3,321,449, issued May 23, 1967; D'Alesandro, U.S. Patent No. 3,355,272, issued November 28, 1967; British Patent No. 1,122,192, published July 31, 1968, as well as U.S. Patent Nos. 3,532,670; 3,634,354; 3,647,751, 3,729,527;and 3,960,815, all incorporated herein by reference. The following articles also show the preparation of these polysulfone resins and are incorporated herein by reference: Johnson, et al.,"Poly(Aryl Ethers) by Nucleophilic Aromatic Substitution 1. Synthesis and Properties", J. of Polymer Science, Part A-1,5,(9)2375-98 (1967); Jennings et al., "Synthesis of Poly(arylene Sulfones) and Poly(Arylene Ketones) by Reactions Involving Substitution of Aromatic Nuclei", J. of Polymer Science, Part C, No. 16 (Part 2) 715-24 (1967) and Hale et al., "Thermal Stability of Polyaryl Ethers Prepared by Aromatic Nucleophilic Substitution", Amer. Chem. Soc., Div. of Polymer Chem., Reprints 7(2) 503-12.

In accordance with the present invention, useful compositions containing the polyetherimide/polyphthalate carbonate blend and a polysulfone are generally obtainable in a broad range of properties relative to each other. Consequently, compositions comprising from about 5 to about 95 percent by weight of the polyetherimide/polyphthalate carbonate blend and from about 5 to about 95 percent by weight polysulfone are included witin the scope of the invention. Preferably, the polyetherimide/polyphthalate carbonate blend is from about 10 to

about 90 percent by weight and the polysulfone is from about 10 to about 90 percent by weight of the total combined weight. By controlling the proportions of the polyetherimide/polyphthalate carbonate blend and polysulfone relative to each other, further improvement of the polyetherimide/polyphthalate carbonate blend can be obtained. In general, the higher the level of polysulfone, the greater is the elongation of the ternary blend.

When any of the above polymers are combined with the polyetherimide/polyphthalate carbonate blend, prior art blending techniques are generally satisfactory. Similar to when the polyetherimide is blended with the polyphthalate carbonate, the preferred method comprises blending the polymers and additives such as reinforcements in powder, granular or filamentous form, extruding the blend, and chopping the extrudate into pellets suitable for molding by means conventionally used to mold normally solid thermoplastic compositions.

The present invention contains at least two distinct and different polymers. It has been discovered that when the polymers are combined as disclosed herein the resulting blends exhibit new and improved properties superior to those exhibited by each component alone.

The following examples are set forth to further illustrate the present invention and are not to be construed as limiting the invention.

## EXAMPLES 1-5

A series of binary blends containing a polyetherimide and a polyphthalate carbonate was prepared according to the present invention. The polymers were melt blended, the blend was molded into test specimens, and the specimens were tested for their physical

properties. The polyetherimide was the same used in the controls. The polyphthalate carbonate that was used is commercially available from the General Electric Company and is identified as Lexan® PPC-4701.

The test results and the respective concentration of each component are shown in Table I.

TABLE I

| Example | 1 | 2 | 3 | 4 | 5 |
|---|---|---|---|---|---|
| Polyetherimide | 80 | 70 | 60 | 50 | 25 |
| Polyphthalate-carbonate | 20 | 30 | 40 | 50 | 75 |
| Extruded @ Ca. | 600 | 580 | 580 | 580 | 560 |
| Molded @ Ca. | 620 | 600 | 600 | 600 | 560 |
| Tensile Strength Yield (psi) | 14,090 | 13,400 | 12,570 | 11,900 | 10,350 |
| Tensile Strength Ultimate (psi) | 10,830 | 10,600 | 10,250 | 10,400 | 8,870 |
| Elongation at Yield (%) | 7.6 | 7.7 | 8.2 | 8.1 | 7.7 |
| Elongation at Failure (%) | 26.1 | 26.0 | 22.0 | 48.0 | 37.1 |
| Flexural Strength 5% (psi) | 18,050 | 17,040 | 15,760 | 15,000 | 13,340 |
| Flexural Strength Ultimate (psi) | 20,000 | 18,850 | 17,960 | 17,000 | 14,980 |
| Flexural Modulus | 447,420 | 426,850 | 394,900 | 396,360 | 342,630 |
| Tg (°C) | 207 | — | — | 184/214 | 183/217 |
| Color | Clear | Clear | Opaque | Opaque | Opaque |
| HDT @ 264psi (°C) | 181.5 | 179.4 | 175.1 | 172.9 | 164.3 |
| Notched Izod | — | — | — | .93 | 2.22 |

EXAMPLES 6-9

A series of ternary blends containing a polyetherimide, a polyphthalate carbonate, and a polysulfone was prepared according to the present invention. The polymers were melt blended, the blends were molded into test specimens and the specimens were tested for their physical properties.

The polyetherimide and the polyphthalate carbonate were the same as used in Examples 1-5. The polysulfone used is commercially available under the tradename Udel P1700 from Union Carbide Corporation.

The results of the tests as well as the respective concentrations of the components appear in Table II.

TABLE II

| Example | 6 | 7 | 8 | 9 |
|---|---|---|---|---|
| Polyetherimide | 75.0 | 12.5 | 12.5 | 34 |
| Polyphthalate-carbonate | 12.5 | 75.0 | 12.5 | 33 |
| Polysulfone | 12.5 | 12.5 | 75.0 | 33 |
| Tensile Strength Yield (psi) | 13,620 | 9,913 | 10,471 | 11,175 |
| Tensile Strength Ultimate (psi) | 11,181 | 9,946 | 9,869 | 9,580 |
| Elongation at Yield (%) | 7.2 | 6.7 | 5.8 | 6.4 |
| Elongation at Failure (%) | 36.5 | 82.5 | 102.3 | 48.5 |
| Flexural Strength 5% (psi) | 16,745 | 12,542 | 14,532 | 14,722 |
| Flexural Strength Ultimate (psi) | 18,769 | 13,950 | 15,561 | 16,266 |
| Flexural Modulus | 415,925 | 319,411 | 369,609 | 369,084 |
| Izod Impact | | | | |
| Notched, 1/8" | 0.85 | 7.51 | 1.24 | 1.66 |
| Unnotched, 1/8" | >16 | >16 | >16 | >16 |
| HDT @264 psi (°C) | 189.6 | 165.4 | 172 | 174.7 |

EXAMPLES 10-14

Another series of blends was prepared in accordance with the present invention containing a polyetherimide, a polyphthalate carbonate and a polycarbonate. The polyetherimide and polyphthalate carbonate were the same as used in the previous examples. The polycarbonate was identified by the tradename LEXAN® 101-112 sold commercially by the General Electric Company. The components were melt blended and injection molded into test specimens which were tested for their physical properties. Table III lists the results of the tests and the respective concentrations of the components.

TABLE III

| Example | 10 | 11 | 12 | 13 | 14 |
| --- | --- | --- | --- | --- | --- |
| Polyetherimide | 80 | 80 | 75.0 | 12.5 | 12.5 |
| Polyphthalate-carbonate | 10 | 7.5 | 12.5 | 75.0 | 12.5 |
| Polycarbonate | 10 | 12.5 | 12.5 | 12.5 | 75.0 |
| Tensile Strength Yield (psi) | 14,000 | 13,920 | 13,560 | 9,720 | 9,040 |
| Tensile Strength Ultimate (psi) | 11,040 | 11,270 | 10,870 | 8,920 | 9,480 |
| Elongation at Yield (°%) | 7.5 | 7.6 | 7.8 | 7.2 | 6.2 |
| Elongation - Ultimate (%) | 24.1 | 16.8 | 24.0 | 59.0 | 89.8 |
| Flexural Strength Ultimate (psi) | 19,850 | 19,790 | 19,180 | 13,860 | 13,660 |
| Flexural Strength at 5% (psi) | 17,960 | 17,870 | 17,370 | 12,500 | 12,840 |
| Flexural Modulus (psi) | 448,460 | 444,250 | 432,800 | 328,900 | 342,700 |
| HDT @ 264psi (°C) | 179.4 | 178.8 | 176.1 | 159.1 | 145 |

EXAMPLES 15-22

A series of ternary blends was prepared in accordance with the present invention containing a polyetherimide, a polyphthalate carbonate, and a polyester. The blends were prepared, molded and tested in a manner similar to the previous examples. The polyetherimide and polyphthalate carbonate were the same as used in the previous examples. The polyester was either polyethylene terephthalate (PET) sold commercially under the tradename Tenite 7352 PET by Eastman Chemical Products Inc. or polybutylene terephthalate, sold under the tradename Valox® 310 by the General Electric Company. Table IV lists the results of the tests and the respective concentrations of each component.

TABLE V

| Example | 15 | 16 | 17 | 18 | 19 | 20 | 21 | 22 |
|---|---|---|---|---|---|---|---|---|
| Polyetherimide | 75.0 | 12.5 | 34 | 12.5 | 75.0 | 12.5 | 34 | 12.5 |
| Polyphthalate carbonate | 12.5 | 75.0 | 33 | 12.5 | 12.5 | 75.0 | 33 | 12.5 |
| PBT | 12.5 | 12.5 | 33 | 75.0 | — | — | — | — |
| PET | — | — | — | | 12.5 | 12.5 | 33 | 75.0 |
| Flexural Strength Ultimate (psi) | 19,818 | 15,058 | 15,718 | 13,682 | 20,524 | 15,190 | 17,140 | 13,976 |
| Flexural Modulus (psi) | 438,000 | 355,000 | 382,000 | 366,000 | 451,000 | 348,000 | 398,000 | 367,000 |
| HDT @ 264 psi (°C) | 149 | 126 | 91 | 73 | 161 | 135 | 118 | 80 |

The compositions of the present invention have application in a wide variety of physical shapes and form, including the use as films, molding compounds, coatings, etc. When used as films or when made into molded products, these polymers, including laminated products prepared therefrom, not only possess good physical properties at room temperature but they retain their strength and excellent response to workloading at elevated temperatures for long periods of time. Films formed from the polymeric compositions of this invention may be used in application where films have been used previously. Thus, the compositions of the present invention can be used in automobile and aviation applications for decorative and protective purposes, and as high temperature electrical insulation for motor slot liners, in transformers, as dielectric capacitors, as coil and cable wrapings (form wound coil insulation for motors), for containers and container linings, in laminating structures where films of the present composition or where solutions of the claimed compositions of matter are applied to various heat-resistant or other type of materials such as asbestos, mica, glass fiber and the like and superimposing the sheets one upon the other and thereafter subjecting them to elevated tempertures and pressures to effect flow and cure of the resinous binder to yield cohesive laminated structures. Films made from these compositions of matter can also serve in printed circuit applications.

Alternatively, solutions of the compositions herein described can be coated on electrical conductors such as copper, aluminum, etc., and thereafter the coated conductor can be heated at elevated temperatures to remove the solvent and to effect curing of the resinous composition thereon. If desired, an additional overcoat may be applied to such insulated conductors including the

use of polymeric coatings, such as polyamides, polyesters, silicones, polyvinylformal resins, epoxy resins, polyimides, polytetrafluoro-ethylene, etc. The use of the curable compositions of the present invention as overcoats on other types of insulation is not precluded.

In addition, molding compositions and molded articles may be formed from the polymeric compositions in this invention by incorporating such fillers as asbestos, glass fibers, talc, quartz powder, wood flour, finely divided carbon, and silica, into such compositions prior to molding. Shaped articles are formed under heat, or under heat and pressure in accordance with practices well-known in the art. In addition, various heat-resistant pigments and dyes may be incorporated as well as various types of inhibitors depending on the application intended.

Other modification and variations of the present invention are possible in light of the above teachings. It is, therefore, to be understood that changes may be made in the particular embodiments of the invention described which are within the full intended scope of the invention as defined by the appended claims.

## CLAIMS

What is claimed is:

1. A thermoplastic composition comprising in admixture a polyetherimide and a polyphthalate carbonate prepared from a dihydric phenol, a carbonate precursor, a terephthalic acid or ester-forming derivative thereof, an isophthalic acid or ester-forming derivative thereof, said polyphthalate carbonate having from about 70 to 95 weight percent ester content and a range of terephthate groups ranging from about 2 to about 15 percent of the ester content.

2. The thermoplastic composition of claim 1 wherein said polyetherimide includes repeating groups of the formula:

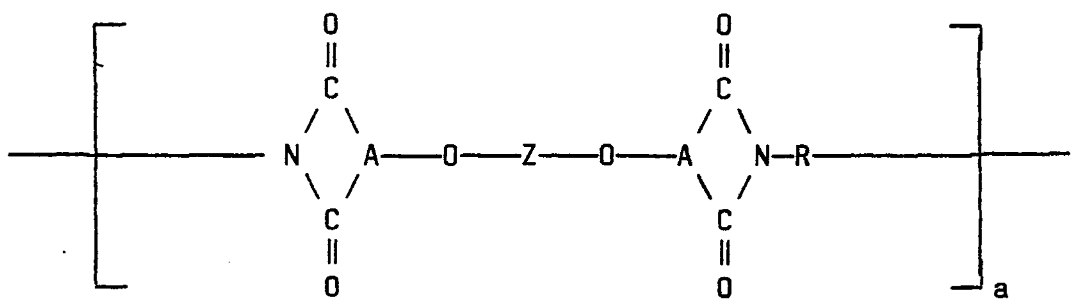

where a represents a whole number in excess of 1, the group -O-A< is selected from:

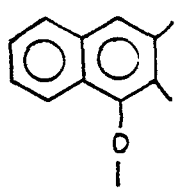 , 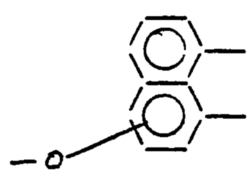 , 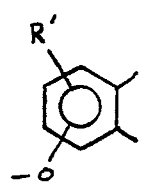

R' being hydrogen, lower alkyl or lower alkoxy, Z is a

member of the class consisting of (1):

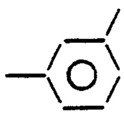

,

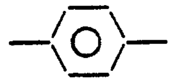

,

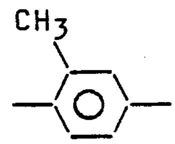

,

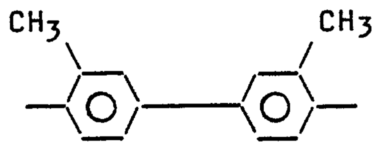

,

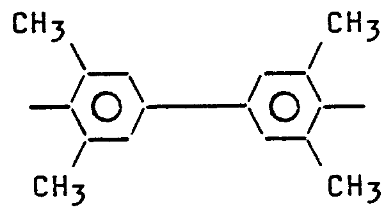

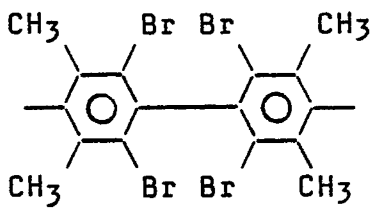

and

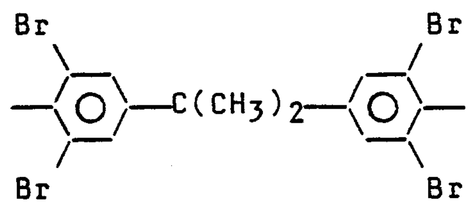

and (2) divalent organic radicals of the general formula:

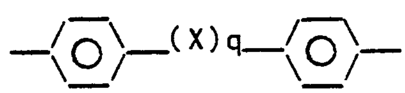

where X is a member selected from the class consisting of divalent radicals of the formulas:

$$-C_yH_{2y}-,\quad -\overset{O}{\overset{\|}{C}}-,\quad -\overset{O}{\overset{\|}{\underset{\underset{O}{\|}}{S}}}-,\quad -O-\ \text{and}\ -S-$$

where q is 0 or 1, y is a whole number from 1 to 5, and R is a divalent organic radical selected from the class consisting of (1) aromatic hydrocarbon radicals having from 6 to about 10 carbon atoms and halogenated

derivatives thereof, (2) alkylene radicals and cycloalkylene radicals having from 2 to about 20 carbon atoms, (3) $C_2$ to about $C_8$ alkylene terminated polydiorganosiloxane, and (4) divalent radicals included by the formula:

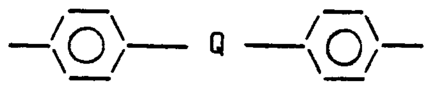

where Q is a member selected from the class consisting of:

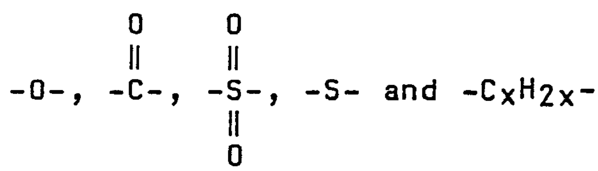

where x is a whole number from 1 to 5 inclusive.

3. The thermoplastic composition of claim 2 wherein the polyetherimide is of the formula:

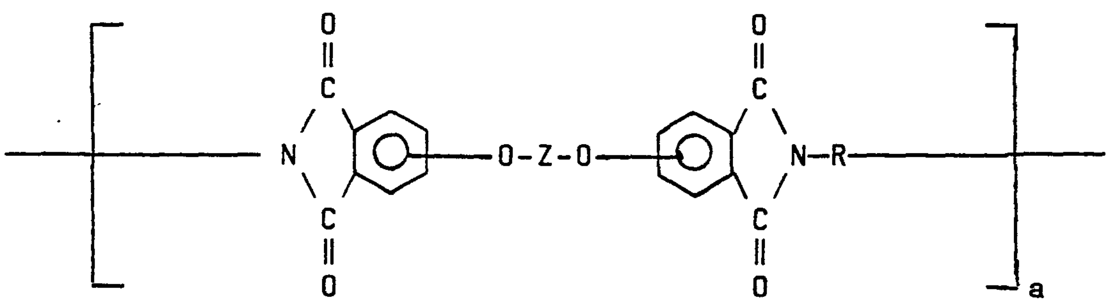

4. The thermoplastic composition of claim 3 wherein Z is:

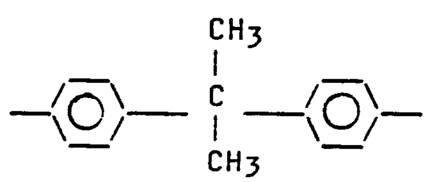

and R is selected from;

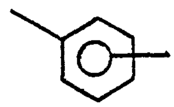 , 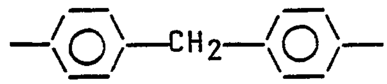 ,

and 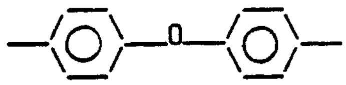

5. The thermoplastic composition of claim 4 wherein the polyetherimide is of the formula:

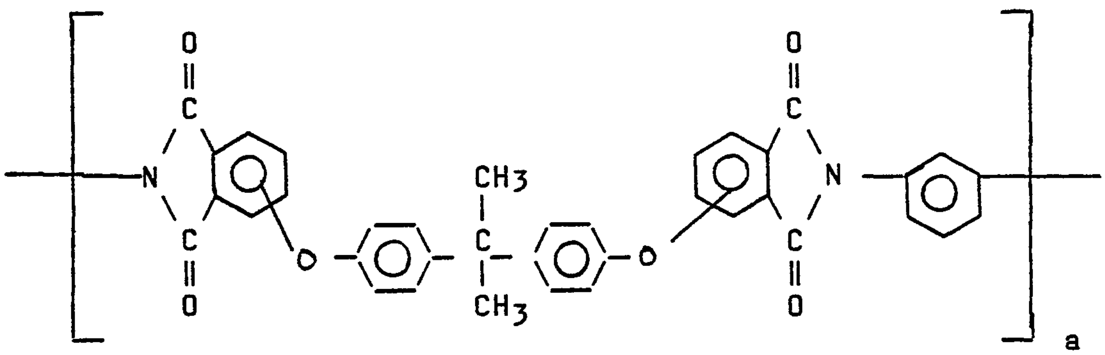

6. The thermoplastic composition of claim 4, wherein the polyetherimide further includes repeating units of the formula

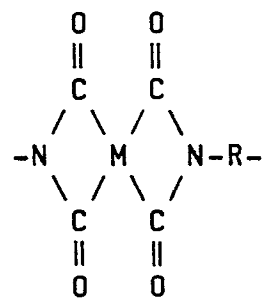

where R is previously defined and M is selected from the group consisting of

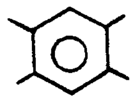 , 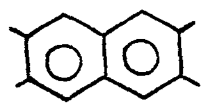 and 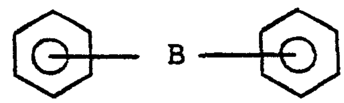

where B is -S- or $-\overset{O}{\overset{\|}{C}}-$.

7. The thermoplastic composition of claim 1 wherein the weight percent ester content is from about 75 to 90.

8. The thermoplastic composition of claim 1 wherein the range of terephthalate groups range from about five to about 10 percent of the ester content.

9. The thermoplastic composition of claim 1 wherein the dihydric phenol is bisphenol A.

10. The thermoplastic composition of claim 1 wherein the polyetherimide ranges from about 1 to 99 percent by weight and the copolyestercarbnoate ranges from about 1 to 99 percent by weight of the total weight of the two components.

11. The thermoplastic composition of claim 10 wherein the polyetherimide ranges from about 10 to 90 percent by weight and the polyphthalate carbonate ranges from about 10 to 90 percent by weight.

12. The thermoplastic composition of claim 1 which contains an additional thermoplastic polymer.

13. The thermoplastic composition of claim 12 wherein said additional polymer is a polysulfone.

14. The thermoplastic composition of claim 13 wherein the polysulfone is of the formula

$$-(W-SO_2-W-B)_n$$

wherein each of W and B is an aryl nucleus; or B is either a direct bond or $-SO_2-$; and "n" is an integer in excess of five.

15. The thermoplastic composition of claim 14, wherein W and B are selected from:

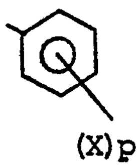

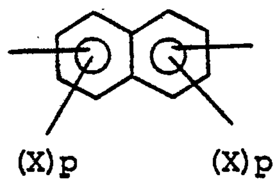

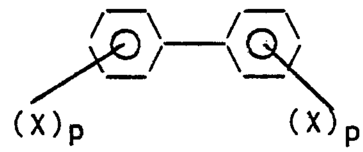

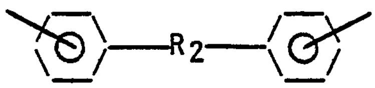

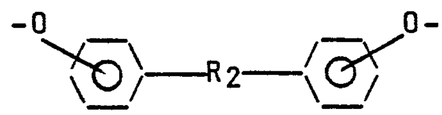

where R2 is a $C_1$-$C_{12}$ alkylene; $C_2$-$C_{12}$ alkylidene; $C_5$-$C_{12}$ cycloalkylene; $C_5$-$C_{12}$ cycloalkylidene; $C_7$-$C_{12}$ aralkylene; $C_7$-$C_{12}$ aralkylidene; or a $C_8$-$C_{12}$ arylene-bis-alkylidene radical,

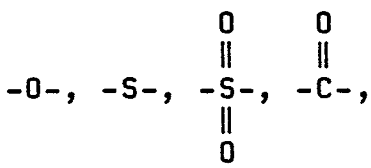

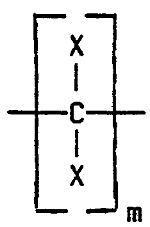

or

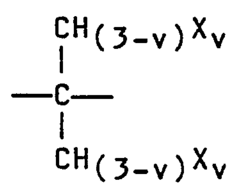

where p is 0 or an integer from 1 to 4, X is halogen, m is an integer from 1 to 6 and v is an integer from 1 to 3 or B is a direct bond or $-SO_2-$.

16. A composition in accordance with claim 15 wherein the polysulfone has the structural formula

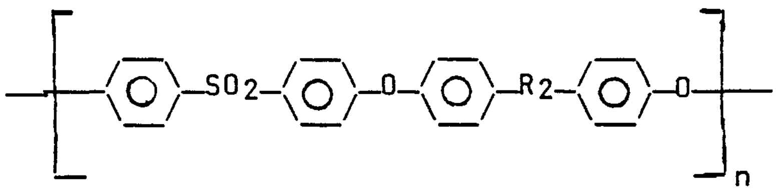

where $R_2$ is $C_1$-$C_6$ alkylene.

17. A composition in accordance with claim 16 wherein $R_2$ is dimethyl methylene.

18. A composition in accordance with claim 15 wherein the polysulfone has the structural formula:

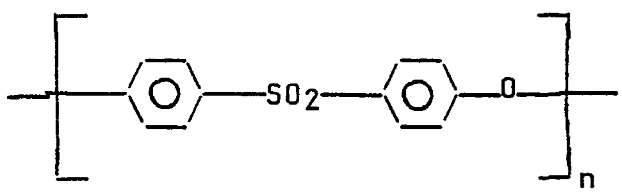

19. A composition in accordance with claim 15 wherein the polysulfone has the structural formula:

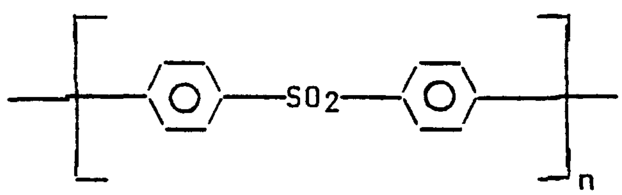

20. The thermoplastic composition of claim 13 wherein said polysulfone is present in an amount ranging from about 5 to 95 percent by weight based on the total weight of said polysulfone and polyetherimide/polyphthalate carbonate blend.

21. The thermoplastic composition of claim 13, wherein said polysulfone is present in an amount ranging from about 1 to about 90 percent by weight based on the total weight of said polysulfone and polyetherimide/polyphthalate carbonate blend.

22. The thermoplastic composition of claim 12 wherein said additional polymer is a polyester.

23. The thermoplastic composition of claim 22 wherein said polyester is of the formula

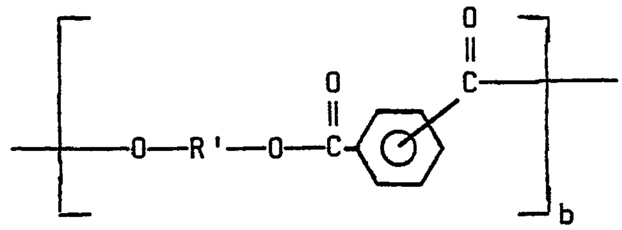

where b represents a whole number in excess of 1, R' is a divalent alkylene radical containing from 2 to 10 carbon atoms, and the carboxylate groups are located on the aromatic ring in the para- or meta-positions relative to each other.

24. The thermoplastic composition of claim 23 wherein said polyester is selected from the group consisting of polyethylene terephthalate, polybutylene terephthalate or mixtures thereof.

25. The thermoplastic composition of claim 22 wherein said polyester is present in an amount ranging from about 5 to 95 percent by weight based on the total weight of said polyester and polyetherimide/ polyphthalate carbonate blend.

26. The thermoplastic composition of claim 25 wherein the amount of polyester ranges from about 10 to about 90 percent by weight.

27. The thermoplastic composition of claim 12 wherein said additional polymer is a polycarbonate.

28. The thermoplastic composition of claim 27 wherein said polycarbonate is derived from dihydric phenol and a carbonate precursor.

29. The thermoplastic composition of claim 27 wherein the dihydric phenol is bisphenol A and the carbonate precursor is carbonyl chloride.

30. The thermoplastic composition of claim 27 wherein said polycarbonate contains recurring structural units of the formula:

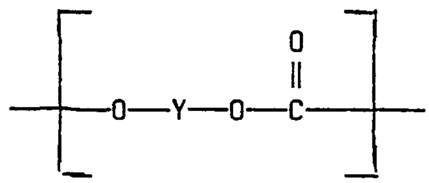

where Y is a divalent aromatic radical of the dihydric phenol employed in the polycarbonate producing reaction.

31. The thermoplastic composition of claim 30 wherein the polycarbonate is derived from a dihydric phenol, a dicarboylic acid and a carbonate precursor.

32. The thermoplastic composition of claim 27 wherein said polycarbonate is present in an amount ranging from about 5 to 95 percent by weight based on the total weight of said polycarbonate and polyetherimide/ polyphthalate carbonate blend.

33. The thermoplastic composition of claim 32 wherein said polycarbonate is present in an amount ranging from about 10 to 90 percent by weight.